# EUROPÄISCHE PATENTSCHRIFT

(11) **EP 2 923 975 B1**
(45) Veröffentlichungstag und Bekanntmachung des Hinweises auf die Patenterteilung: **05.02.2020**
(21) Anmeldenummer: 14161669.8
(22) Anmeldetag: 26.03.2014
(51) Int. Cl.: B65G 59/00, B65G 59/02

(54) **Depalettiervorrichtung und Depalettierverfahren zur Entnahme von Lagen aus Paketen von einem Gutstapel**
Depalletising device and depalletising method for removing layers of packets from a stack of goods
Dispositif et procédé de dépalettisation pour le prélèvement de couches à partir de paquets d'une pile de marchandises

(43) Veröffentlichungstag der Anmeldung: 30.09.2015
(73) Patentinhaber: Segbert GmbH & Co. KG, 48683 Ahaus (DE)
(72) Erfinder: Segbert, Klaus, 48599 Gronau (DE)
(74) Vertreter: Rohmann, Michael

(56) Entgegenhaltungen:
- EP-A1- 0 548 519
- DE-U1-202010 007 932
- JP-A- H10 310 257
- JP-A- 2005 034 969
- US-A1- 2009 148 266

## Beschreibung

Die Erfindung betrifft eine Depalettiervorrichtung zur Entnahme von Lagen aus Paketen (Paketlagen), insbesondere Paketen aus Druckerzeugnissen, von einem Gutstapel, wobei die jeweils oberste Lage des Gutstapels auf eine Lagenfördereinrichtung überführbar ist, wobei dazu die Lagenfördereinrichtung unterhalb der obersten Lage des Gutstapels im Gutstapel positionierbar ist und wobei die auf der Lagenfördereinrichtung angeordnete oberste Lage mit der Lagenfördereinrichtung von dem Gutstapel zu einer Vereinzelungsvorrichtung hin förderbar bzw. transportierbar ist. Die Erfindung betrifft fernerhin ein Depalettierverfahren zur Entnahme solcher Paketlagen. - Mit dem Begriff Gutstapel ist eine Mehrzahl von Paketen, insbesondere Paketen aus Druckerzeugnissen gemeint, die in mehreren Lagen übereinander zu dem Gutstapel, vorzugsweise zu einem quaderförmigen Gutstapel gestapelt sind. Es liegt im Rahmen der Erfindung, dass die Pakete quaderförmig ausgebildet sind und dass die Einzelnen, im Gutstapel übereinander angeordneten Lagen in der Draufsicht rechteckförmig bzw. quadratisch ausgebildet sind. Es liegt fernerhin im Rahmen der Erfindung, dass ein solcher Gutstapel auf einer Palette angeordnet ist.

Eine Depalettiervorrichtung der eingangs genannten Art ist aus DE 20 2010 007 932 U1 bekannt. Bei dieser bekannten Vorrichtung lässt jedoch sowohl die Depalettiergeschwindigkeit als auch die Funktionssicherheit der Lagen- bzw. Pakethandhabung zu wünschen übrig.

Vorrichtungen und Verfahren zum Depalettieren sind aus der Praxis im Übrigen in unterschiedlichen Ausführungsformen bekannt. Viele dieser Vorrichtungen bzw. Verfahren weisen jedoch Nachteile auf. Häufig lässt die Depalettiergeschwindigkeit bei den bekannten Maßnahmen zu wünschen übrig oder eine erhöhte Depalettiergeschwindigkeit geht zu Lasten der Funktionssicherheit und Störanfälligkeit. Bei vielen bekannten Vorrichtungen wird bei der Depalettierung eine Lage aus Paketen von dem Gutstapel geschoben und der Vereinzelung zugeführt. Eine funktionssichere und verschiebungsfreie Überführung der Lage ist dabei schwierig. Oft müssen zeitaufwendige Korrekturen und nicht selten manuelle Eingriffe vorgenommen werden. Das ist aufwendig und kostspielig und geht zu Lasten der Depalettiergeschwindigkeit, so dass kontinuierliche Depalettiermaßnahmen in der Regel schwierig bzw. nicht möglich sind. - Um Beschädigungen bei der Depalettierung zu vermeiden sind bei den bekannten Maßnahmen zwischen den einzelnen Lagen eines Gutstapels verhältnismäßig dicke Zwischenbögen angeordnet. Das ist materialaufwendig und kostspielig. Häufig werden die Zwischenbögen in aufwendiger Weise mit Hilfe von Saugvorrichtungen oder dergleichen entfernt. Auch diese Maßnahmen sind störanfällig. Im Ergebnis sind die bekannten Maßnahmen verbesserungsfähig.

Dementsprechend liegt der Erfindung das technische Problem zugrunde, eine Depalettiervorrichtung der eingangs genannten Art anzugeben, bei der die vorstehend beschriebenen Probleme vermieden werden können. Fernerhin liegt der Erfindung das technische Problem zugrunde, ein entsprechendes Depalettierverfahren anzugeben.

Zur Lösung des technischen Problems lehrt die Erfindung eine Depalettiervorrichtung der eingangs beschriebenen Art, welche dadurch gekennzeichnet ist, dass eine Hubeinrichtung vorgesehen ist, mit der ein Seitenbereich eines zwischen der zu fördernden obersten Lage und der darunter vorhandenen Lage angeordneten Zwischenbogens klemmend ergreifbar und anhebbar ist, so dass der Gutstapel mit seiner obersten Lage auf die Lagenfördereinrichtung ziehbar ist. Es liegt im Rahmen der Erfindung, dass im Anschluss daran die nächste - nunmehr oberste Lage des Gutstapels - auf die Lagenfördereinrichtung überführbar ist und so weiter fort.

Es liegt weiterhin im Rahmen der Erfindung, dass der Gutstapel quaderförmig ausgebildet ist und dass der Gutstapel bevorzugt auf einer Palette angeordnet ist. Eine Lage bzw. Paketlage des Gutstapels ist in der Draufsicht vorzugsweise rechteckig ausgebildet. Im Rahmen der Erfindung ist es auch möglich, dass beispielsweise die beiden obersten Lagen eines Gutstapels in einem Verfahrensschritt auf die Lagenfördereinrichtung überführt werden. Dann ist dieses Aggregat aus den beiden Lagen als oberste Lage des Gutstapels im Sinne der Erfindung aufzufassen. Vorzugsweise wird jedoch lediglich die eine oberste Lage eines Gutstapels jeweils auf die Lagenfördereinrichtung überführt. - Dass die Lagenfördereinrichtung unterhalb der obersten Lage des Gutstapels im Gutstapel positioniert wird, meint im Rahmen der Erfindung, dass die Lagenfördereinrichtung bzw. ein Teil der Lagenfördereinrichtung zwischen der obersten Lage des Gutstapels und einer darunter angeordneten Lage des Gutstapels positioniert wird. Die Lagenfördereinrichtung dringt insoweit also gleichsam in den Gutstapel ein. - Vereinzelung meint im Rahmen der Erfindung, dass eine Lage bzw. Paketlage zu einzelnen Paketen vereinzelt wird und zweckmäßigerweise zunächst in einzelne Reihen überführt wird.

Eine bevorzugte Ausführungsform der erfindungsgemäßen Vorrichtung ist dadurch gekennzeichnet, dass eine Haubeneinrichtung auf dem Gutstapel positionierbar ist und dass Zentrierelemente der Haubeneinrichtung an Seitenflächen bzw. an den Seitenflächen des Gutstapels angelegt werden. Empfohlenermaßen wird anschließend der gesamte Gutstapel mit bzw. mit Hilfe der Haubeneinrichtung zu der Lagenfördereinrichtung hin verfahren, so dass die oberste Lage des Gutstapels auf der Lagenfördereinrichtung positioniert wird. Wie oben bereits dargelegt, liegt es im Rahmen der Erfindung, dass die Lagenfördereinrichtung bzw. ein Teil der Lagenfördereinrichtung unter der obersten Lage und über der darunter im Gutstapel folgenden Lage angeordnet wird.

Zweckmäßigerweise ist die Haubeneinrichtung zunächst über der Lagenfördereinrichtung angeordnet und zwar liegt es im Rahmen der Erfindung, dass die Haubeneinrichtung in einem Maschinengestell über der Lagenfördereinrichtung positioniert ist. Zur Depalettierung fährt die Haubeneinrichtung vorzugsweise aus dem Maschinengestell über den Gutstapel aus, so dass sie nicht mehr über der Lagenfördereinrichtung angeordnet ist. Es liegt im Rahmen der Erfindung, dass im Anschluss daran die Haubeneinrichtung auf den Gutstapel verfahren wird bzw. herunter auf den Gutstapel verfahren wird. Zweckmäßigerweise wird dabei das gesamte Aggregat aus Lagenfördereinrichtung und Haubeneinrichtung nach unten bewegt, so dass die Haubeneinrichtung auf dem Gutstapel angeordnet ist und die Seitenflächen des Gutstapels mit Zentrierelementen umgreift bzw. umfasst. Vorzugsweise liegen dabei Haubenelemente der Haubeneinrichtung auf der Oberseite des Gutstapels auf. Es empfiehlt sich, dass Zentrierelemente der Haubeneinrichtung an zumindest einer Seitenfläche, vorzugsweise an zumindest zwei Seitenflächen und bevorzugt an zumindest drei Seitenflächen des Gutstapels anliegen. Daraufhin wird der gesamte Gutstapel mit bzw. mit Hilfe der Haubeneinrichtung zur Lagenfördereinrichtung hin verfahren, so dass zweckmäßigerweise die Haubeneinrichtung wieder in das Maschinengestell einfährt. Es liegt dabei im Rahmen der Erfindung, dass der Gutstapel mit Hilfe eines darunter angeordneten Verfahrwagens zu der Lagenfördereinrichtung bzw. zu dem Maschinengestell hin verfahrbar ist. Dabei wird die oberste Lage des Gutstapels gleichsam auf die Lagenfördereinrichtung gezogen, so dass die Lagenfördereinrichtung bzw. ein Teil der Lagenfördereinrichtung in dem Gutstapel unterhalb der obersten Lage und oberhalb der darunter angeordneten Lage positioniert ist. Die Haubeneinrichtung ist dann zweckmäßigerweise wiederum über bzw. oberhalb der Lagenfördereinrichtung im Maschinengestell angeordnet. Es liegt somit im Rahmen der Erfindung, dass die Haubeneinrichtung aus dem Maschinengestell ausfahrbar und zwecks Förderung des Gutstapels zur Lagenfördereinrichtung hin in das Maschinengestell einfahrbar ist. Schließlich wird - wie unten noch eingehender beschrieben - die oberste Lage mittels der Lagenfördereinrichtung zu einer Vereinzelungsvorrichtung hin gefördert.

Erfindungsgemäß ist eine Hubeinrichtung vorgesehen, mit der ein Seitenbereich eines Zwischenbogens anhebbar ist, der zwischen der zu fördernden obersten Lage und der darunter vorhandenen Lage des Gutstapels angeordnet ist. Dadurch wird die Positionierung der Lagenfördereinrichtung zwischen der obersten Lage und der darunter angeordneten Lage des Gutstapels deutlich vereinfacht. Nach dem Anheben des Seitenbereiches des Zwischenbogens mittels der Hubeinrichtung wird der Gutstapel mit seiner obersten Lage auf die Lagenfördereinrichtung gezogen. Es liegt somit im Rahmen der Erfindung, dass die oberste Lage mit dem darunter angeordneten Zwischenbogen auf die Lagenfördereinrichtung gezogen bzw. transportiert wird. Es liegt weiterhin im Rahmen der Erfindung, dass beim Anheben des Seitenbereiches des Zwischenbogens mittels der Hubeinrichtung zumindest auch die dem Seitenbereich zugeordnete erste Reihe der obersten Lage angehoben wird bzw. etwas angehoben wird. Dadurch kann die oberste Lage relativ problemlos auf die Lagenfördereinrichtung aufgezogen werden.

Die im Rahmen der Erfindung eingesetzten Zwischenbögen zwischen den einzelnen Lagen des Gutstapels bestehen zweckmäßigerweise aus Pappe. Es liegt im Rahmen der Erfindung, dass sich ein solcher Zwischenbogen über die gesamte Fläche zwischen zwei Lagen des Gutstapels erstreckt. Es liegt weiterhin im Rahmen der Erfindung, dass der Zwischenbogen zumindest an der der Lagenfördereinrichtung zugewandten Seitenfläche des Gutstapels seitlich über die jeweiligen Lagen vorsteht, so dass ein entsprechender Seitenbereich des Zwischenbogens von der Hubeinrichtung angehoben werden kann. Erfindungsgemäß wird der Seitenbereich des Zwischenbogens von der Hubeinrichtung klemmend ergriffen und angehoben. Gemäß einer Ausführungsform wird die Hubeinrichtung bzw. eine Hubklappe mittels eines elektromotorischen Antriebs angehoben.
Eine bevorzugte Ausführungsform der erfindungsgemäßen Vorrichtung ist dadurch gekennzeichnet, dass die Lagenfördereinrichtung ein gutstapelseitiges verjüngtes Ende aufweist, so dass das verjüngte Ende der Lagenfördereinrichtung zwischen der obersten Lage und der darunter angeordneten Lage des Gutstapels einschiebbar ist bzw. so dass sich das verjüngte Ende der Lagenfördereinrichtung beim Ziehen des Gutstapels zur Lagenfördereinrichtung hin zwischen der obersten Lage und der darunter angeordneten Lage des Gutstapels einschiebt. Gemäß einer Ausführungsform der Erfindung wird das verjüngte Ende der Lagenfördereinrichtung von einer sich zum Gutstapel hin verjüngenden Einschubleiste gebildet, wobei sich die Einschubleiste bevorzugt über den größten Teil der Breite der Lagenfördereinrichtung erstreckt. Breite meint hier die Erstreckung quer zur Förderrichtung der Lage bzw. Lagen.

Eine besonders empfohlene Ausführungsform der Erfindung ist dadurch gekennzeichnet, dass die Lagenfördereinrichtung zumindest ein Lagenförderband aufweist und dass sich das Lagenförderband vorzugsweise zum Gutstapel hin verjüngt. Es liegt im Rahmen der Erfindung, dass das Lagenförderband selbst das oben beschriebene verjüngte Ende bildet. Nach einer bevorzugten Ausführungsvariante ist die sich verjüngende Einschubleiste an das Lagenförderband angeschlossen und zweckmäßigerweise an das sich zum Gutstapel hin verjüngende Lagenförderband angeschlossen. Verjüngend meint in diesem Zusammenhang insbesondere, dass sich die vertikale Ausdehnung des Lagenförderbandes bzw. der Einschubleiste zum Gutstapel hin verringert. Es liegt im Übrigen im Rahmen der Erfindung, dass das Lagenförderband als Endlosband ausgeführt ist.

Eine besonders empfohlene Ausführungsform der erfindungsgemäßen Vorrichtung zeichnet sich dadurch aus, dass die Lagenfördereinrichtung bzw. das Lagenförderband beim Positionieren bzw. während des Positionierens der obersten Lage des Gutstapels auf der Lagenfördereinrichtung in Aufziehrichtung der obersten Lage fördert. Es liegt im Rahmen der Erfindung, dass die Lagenfördereinrichtung bzw. das Lagenförderband in Richtung der Vereinzelungsvorrichtung fördert. Somit wird die Lagenfördereinrichtung bzw. das Lagenförderband beim Aufziehen der obersten Lage des Gutstapels fördernd angetrieben, so dass die oberste Lage aufgrund der Förderrichtung auf die Lagenfördereinrichtung bzw. auf das Lagenförderband aufgezogen wird.

Empfohlenermaßen weist die Haubeneinrichtung eine Hubklappe auf, welche Hubklappe beim Transport der obersten Lage des Gutstapels auf die Lagenfördereinrichtung an der lagenfördereinrichtungsseitigen Seitenfläche (vordere Seitenfläche) der obersten Lage des Gutstapels anliegt. Zweckmäßigerweise wird die Hubklappe bei der Weiterförderung der obersten Lage von der Lagenfördereinrichtung zur Vereinzelungsvorrichtung geöffnet bzw. in eine Offenstellung verfahren. Vorzugsweise wird die Hubklappe nach der vollständigen Auflage der obersten Lage auf der Lagenfördereinrichtung zur Weiterförderung der obersten Lage zur Vereinzelungsvorrichtung geöffnet bzw. in eine Offenstellung verfahren. Es liegt im Rahmen der Erfindung, dass die auf der Lagenfördereinrichtung aufgenommene Lage zunächst auf zumindest eine Zwischenfördereinrichtung gefördert wird und anschließend von der Zwischenfördereinrichtung an die Vereinzelungsvorrichtung übergeben wird. Es liegt fernerhin im Rahmen der Erfindung, dass die Zwischenfördereinrichtung als zumindest ein Zwischenförderband ausgebildet ist, wobei es sich bei dem Zwischenförderband zweckmäßigerweise um ein Endlosband handelt. Vorzugsweise wird die zu fördernde Lage von der Zwischenfördereinrichtung an die Vereinzelungsvorrichtung übergeben, wobei die Vereinzelungsvorrichtung nach einer Ausführungsvariante einen Rollenförderer umfasst.

Wie oben bereits dargelegt, wird nach besonders empfohlener Ausführungsform die oberste Lage des Gutstapels jeweils mit dem darunter angeordneten Zwischenbogen befördert bzw. auf die Lagenfördereinrichtung gefördert. Eine besonders bevorzugte Ausführungsform der Erfindung ist dadurch gekennzeichnet, dass zwischen der Lagenfördereinrichtung und der Vereinzelungsvorrichtung bzw. zwischen einer an die Lagenfördereinrichtung anschließenden Zwischenfördereinrichtung und der Vereinzelungsvorrichtung zumindest eine Bogenkralle zur Umlenkung und zur Trennung zumindest eines unter der geförderten obersten Lage angeordneten Zwischenbogens von der Lage. Bogenkralle meint hier insbesondere ein zumindest bereichsweise gebogenes Umlenkelement für den Zwischenbogen, das zumindest einen gegen die Förderrichtung der Lage bzw. des Zwischenbogens gebogenen Umlenkabschnitt aufweist. Es liegt im Rahmen der Erfindung, dass der Zwischenbogen von der Bogenkralle bzw. von dem gebogenen Umlenkabschnitt der Bogenkralle umgelenkt wird, sobald der in Förderrichtung vordere Rand des Zwischenbogens mit der Bogenkralle in Kontakt kommt. Die Bogenkralle ist vorzugsweise mit der Maßgabe bogenförmig ausgeführt, dass der zugeförderte Zwischenbogen nach unten abgelenkt bzw. abgefördert wird. Nach besonders empfohlener Ausführungsform der Erfindung ist die Bogenkralle quer zur Förderrichtung der Lage ausfahrbar und wieder einfahrbar. Zweckmäßigerweise ist die Bogenkralle dabei nach oben ausfahrbar und nach unten wieder einfahrbar. Im ausgefahrenen Zustand stößt der vordere Rand des geförderten Zwischenbogens dann gegen die Bogenkralle und wird dann nach unten umgelenkt. Es liegt im Rahmen der Erfindung, dass die Bogenkralle lediglich kurzzeitig ausgefahren wird, um den vorderen Rand des zugeführten Zwischenbogens nach unten abzulenken. Anschließend wird die Bogenkralle empfohlenermaßen wieder eingefahren und der genannte Zwischenbogen wird weiter nach unten befördert, während die Lage bzw. die Pakete der Lage über die eingefahrene Bogenkralle hinweg gefördert werden können. Zweckmäßigerweise sind im Bereich der Bogenkralle bzw. unterhalb der Bogenkralle Fördereinrichtungen bzw. Förderbänder für die Abförderung des Zwischenbogens vorgesehen. Es empfiehlt sich, dass ein Zwischenbogenmagazin für das Auffangen und die Ablage der von den geförderten Paketlagen getrennten Zwischenbögen. Die mit der Lagenfördereinrichtung bzw. mit der Zwischenfördereinrichtung zugeführten Zwischenbögen werden also zweckmäßigerweise zunächst mittels der Bogenkralle abgelenkt - vorzugsweise nach unten abgelenkt - und anschließend in einem Zwischenbogenmagazin aufgefangen und abgelegt. Es liegt im Rahmen der Erfindung, dass diese Zwischenbögen für die Palettierung wiederverwendet werden können. Im Vergleich zu aus den Praxis bekannten Zwischenbögen können die im Rahmen der Erfindung eingesetzten Zwischenbögen - wie oben bereits angedeutet - aus Pappe bzw. aus verhältnismäßig dünner Pappe bestehen. Es liegt im Rahmen der Erfindung, dass die Zwischenbögen zunächst mit den Lagen von dem Gutstapel abgefördert werden. Insoweit sind keine aufwendigen Saugvorrichtungen oder dergleichen zum Entfernen der Zwischenbögen aus dem Gutstapel bzw. von den Lagen erforderlich.

Gegenstand der Erfindung ist auch ein Depalettierverfahren zur Entnahme von Lagen aus Paketen (Paketlagen), vor allem aus Paketen aus Druckerzeugnissen, von einem Gutstapel, wobei der Seitenbereich (12) eines zwischen der zur fördernden obersten Lage und der darunter vorhandenen Lage angeordneten Zwischenbogens von der Hubeinrichtung klemmend ergriffen und angehoben wird, wobei die Lagenfördereinrichtung unterhalb der obersten Lage des Gutstapels im Gutstapel positioniert wird, wobei die jeweils oberste Lage des Gutstapels mit dem darunter angeordneten Zwischenbogen auf die Lagenfördereinrichtung gezogen wird und wobei die auf der Lagenfördereinrichtung angeordnete oberste Lage mit dem darunter angeordneten Zwischenbogen mit der Lagenfördereinrichtung zu einer Vereinzelungsvorrichtung hin gefördert wird bzw. transportiert wird. Es liegt im Rahmen der Erfindung, dass auf diese Weise Lage um Lage von dem Gutstapel abgefördert wird. Nach bevorzugter Ausführungsform des erfindungsgemäßen Verfahrens wird zunächst eine Haubeneinrichtung der Vorrichtung über dem Gutstapel bzw. auf dem Gutstapel positioniert. Zweckmäßigerweise befindet sich zunächst die Haubeneinrichtung in einem Maschinengestell über der Lagenfördereinrichtung. Anschließend wird die Haubeneinrichtung aus dem Maschinengestell in Richtung des zu depalettierenden Gutstapels ausgefahren. Daraufhin wird vorzugsweise die Haubeneinrichtung zu dem Gutstapel heruntergefahren. Es liegt dabei im Rahmen der Erfindung, dass das gesamte Aggregat aus Haubeneinrichtung und daran angeschlossener Lagenfördereinrichtung nach unten gefahren wird. Anschließend liegt zweckmäßigerweise die Haubeneinrichtung mit Haubenelementen auf der Oberseite des Gutstapels auf und Zentrierelemente der Haubeneinrichtung liegen vorzugsweise an Seitenflächen bzw. an den Seitenflächen des Gutstapels an. Empfohlenermaßen wird dann der gesamte Gutstapel mit bzw. mit Hilfe der Haubeneinrichtung zu der Lagenfördereinrichtung hin verfahren, so dass die Haubeneinrichtung wiederum oberhalb der Lagenfördereinrichtung angeordnet ist. Dabei wird die oberste Lage des Gutstapels auf der Lagenfördereinrichtung positioniert. Die Lagenfördereinrichtung bzw. ein Teil der Lagenfördereinrichtung ist dann zweckmäßigerweise unterhalb der obersten Lage des Gutstapels und oberhalb der darunter angeordneten Lage im Gutstapel angeordnet bzw. positioniert. Nach besonders bevorzugter Ausführungsform fördert bei dem Aufziehen der obersten Lage auf die Lagenfördereinrichtung die Lagenfördereinrichtung in Aufziehrichtung. Wie oben bereits dargelegt, handelt es sich bei der Lagenfördereinrichtung zweckmäßigerweise um zumindest ein Lagenförderband, das bevorzugt als Endlosband ausgebildet ist.

Der Erfindung liegt die Erkenntnis zugrunde, dass mit der erfindungsgemäßen Vorrichtung und mit dem erfindungsgemäßen Verfahren ein besonders einfaches, zügiges und präzises Depalettieren von Gutstapeln möglich ist. Dabei kann einerseits eine relativ hohe Depalettiergeschwindigkeit erreicht werden und andererseits arbeitet das Verfahren bzw. arbeitet die erfindungsgemäße Vorrichtung sehr funktionssicher und präzise und wenig störanfällig. Die erfindungsgemäße Vorrichtung kann auch mit verhältnismäßig kostengünstigen Komponenten realisiert werden. Die Lagen der Gutstapel können mit dem erfindungsgemäßen Verfahren ohne störende Verschiebungen von Paketen abgefördert werden bzw. vereinzelt werden.

Die im Rahmen der Erfindung eingesetzten Zwischenbögen können in materialsparender Weise relativ dünn ausgebildet sein, insbesondere als Zwischenbögen aus Pappe. Von besonderer Bedeutung ist im Rahmen des erfindungsgemäßen Verfahrens auch, dass die Zwischenbögen aufgefangen und wiederverwertet werden können.

Nachfolgend wird die Erfindung anhand einer lediglich ein Ausführungsbeispiel darstellenden Zeichnung näher erläutert. Es zeigen in schematischer Darstellung:
- **Fig. 1**: Eine perspektivische Ansicht einer erfindungsgemäßen Vorrichtung im eingefahrenen Zustand der Haubeneinrichtung,
- **Fig. 2**: den Gegenstand gemäß Fig. 1 mit ausgefahrener Haubeneinrichtung,
- **Fig. 3**: den Gegenstand nach Fig. 2 in einer Seitenansicht im Schnitt in einer nachfolgenden Funktionsstellung,
- **Fig. 4**: den Gegenstand gemäß Fig. 3 in einer weiteren Funktionsstellung,
- **Fig. 5**: den Gegenstand nach Fig. 3 in einer zusätzlichen Funktionsstellung,

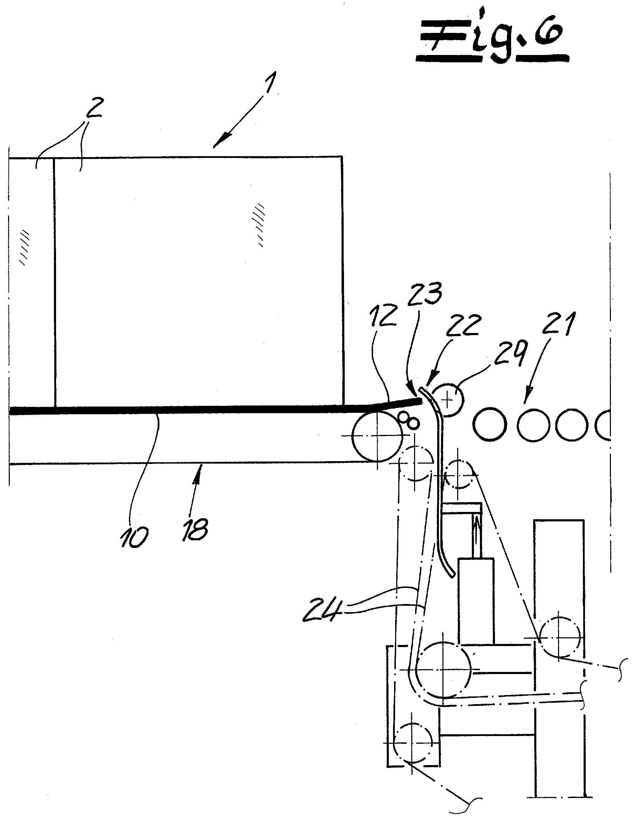

- **Fig. 6**: einen vergrößerten Ausschnitt des Gegenstandes nach den Fig. 3 bis 5 in einer ersten Funktionsstellung und

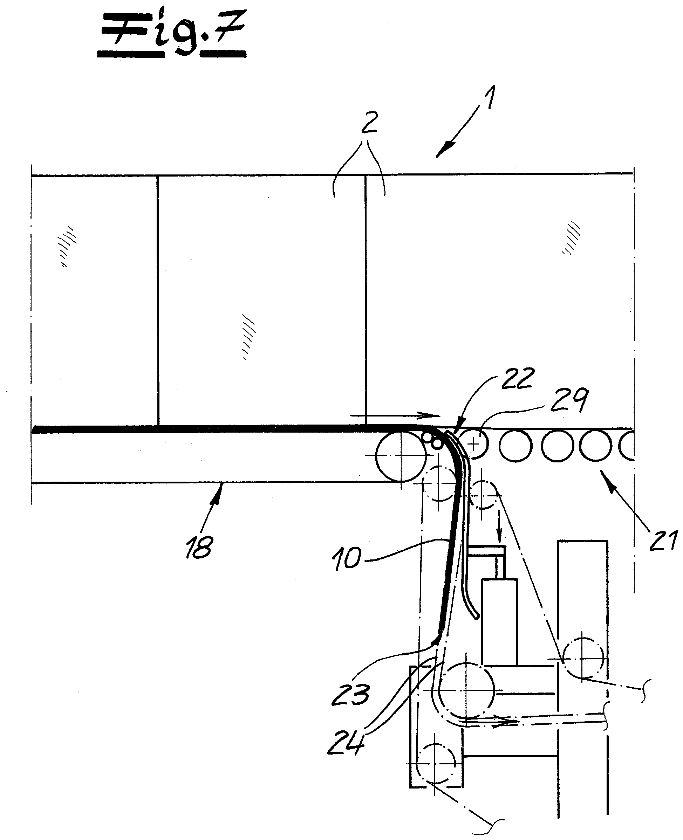

- **Fig. 7**: den Gegenstand nach Fig. 6 in einer zweiten Funktionsstellung.

Die Figuren zeigen eine erfindungsgemäße Depalettiervorrichtung zur Entnahme von Lagen 1 aus Paketen 2 von einem Gutstapel 3. Bei den Paketen 2 handelt es sich vorzugsweise und im Ausführungsbeispiele um Pakete 2 aus Druckerzeugnissen. Der Gutstapel 3 ist empfohlenermaßen und im Ausführungsbeispiel auf einer Palette 17 angeordnet. Erfindungsgemäß wird die jeweils oberste Lage des Gutstapels 3 auf eine Lagenfördereinrichtung 4 überführt. Die Lagenfördereinrichtung 4 weist bevorzugt und im Ausführungsbeispiel ein als Endlosband ausgebildetes Lagenförderband 5 auf.

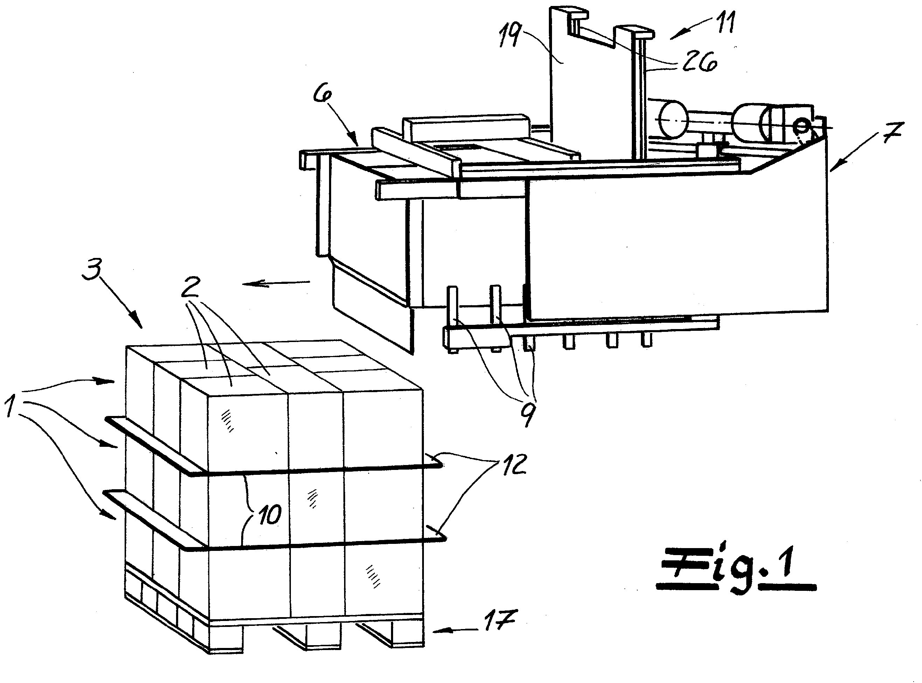

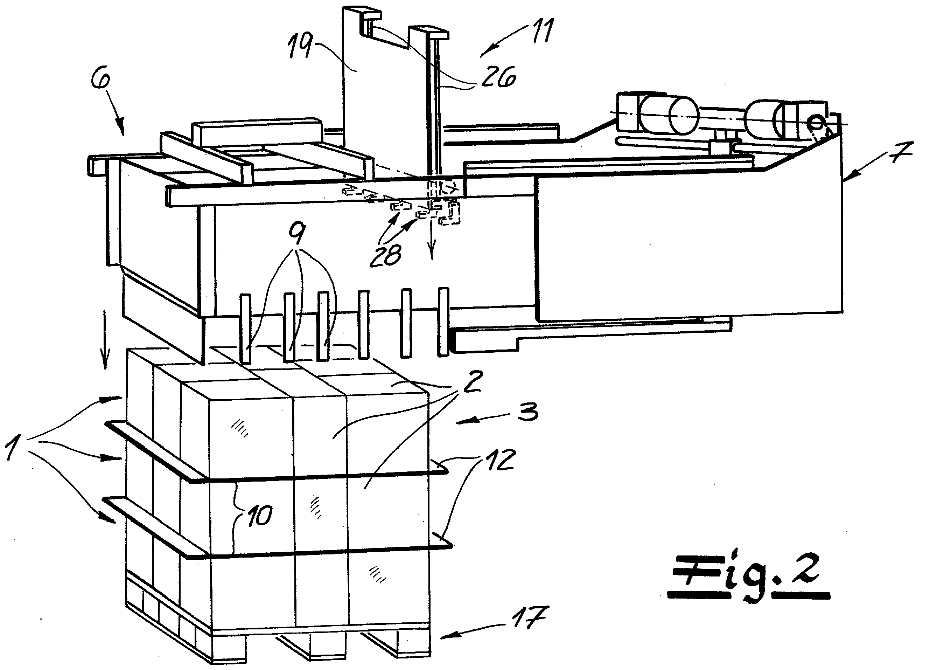

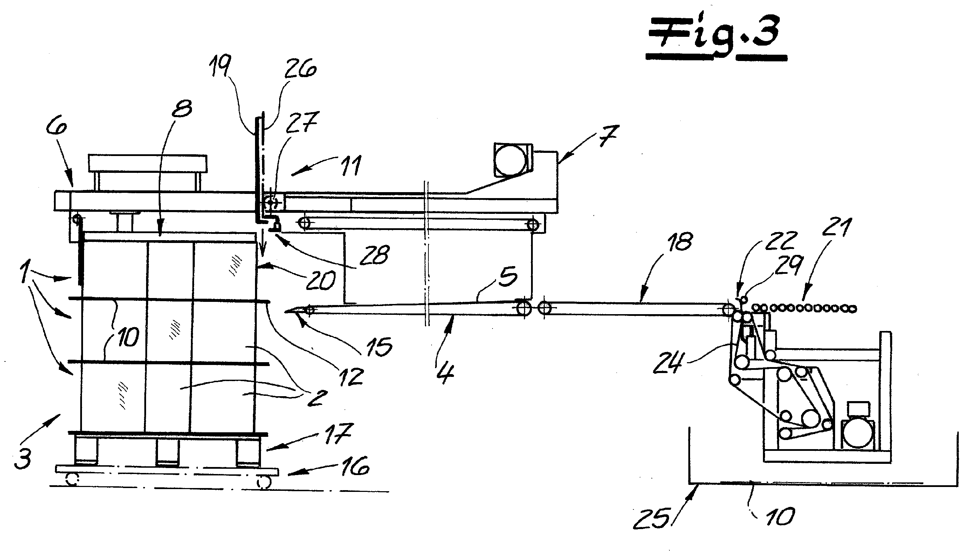

Die Fig. 1 zeigt eine bevorzugte Ausführungsform der erfindungsgemäßen Vorrichtung in einem eingefahrenen Zustand, in dem eine Haubeneinrichtung 6 in einem Maschinengestell oberhalb der Lagenfördereinrichtung 4 bzw. oberhalb des Lagenförderbandes 5 angeordnet ist. Zur Entnahme der obersten Lage 1 aus dem Gutstapel 3 fährt die Haubeneinrichtung 6 vorzugsweise aus dem Maschinengestell 7 aus, bis die Haubeneinrichtung 6 oberhalb des Gutstapels 3 angeordnet ist (Fig. 2). Im Anschluss daran wird zweckmäßigerweise und im Ausführungsbeispiel das Aggregat aus der Lagenfördereinrichtung 4 und der Haubeneinrichtung 6 abgesenkt, so dass die Haubeneinrichtung 6 auf den Gutstapel 3 gefahren wird (Fig. 3). Dabei liegen empfohlenermaßen und im Ausführungsbeispiel Haubenelemente 8 der Haubeneinrichtung 6 auf der Oberseite des Gutstapels 3. Bevorzugt und im Ausführungsbeispiel liegen ferner Zentrierelemente 9 der Haubeneinrichtung 6 an den Seitenflächen des Gutstapels 3 an. Auf diese Weise wird eine Verschiebung insbesondere der Pakete 2 der obersten Lage 1 des Gutstapels 3 bei der weiteren Handhabung vermieden. Anschließend wird empfohlenermaßen und im Ausführungsbeispiel der gesamte Gutstapel 3 mit Hilfe der Haubeneinrichtung 6 zur Lagenfördereinrichtung 4 bzw. zum Maschinengestell 7 hin verfahren, so dass die oberste Lage des Gutstapels 3 auf der Lagenfördereinrichtung 4 bzw. auf dem Lagenförderband 5 positioniert wird (siehe vergleichende Betrachtung der Fig. 3 bis 5).

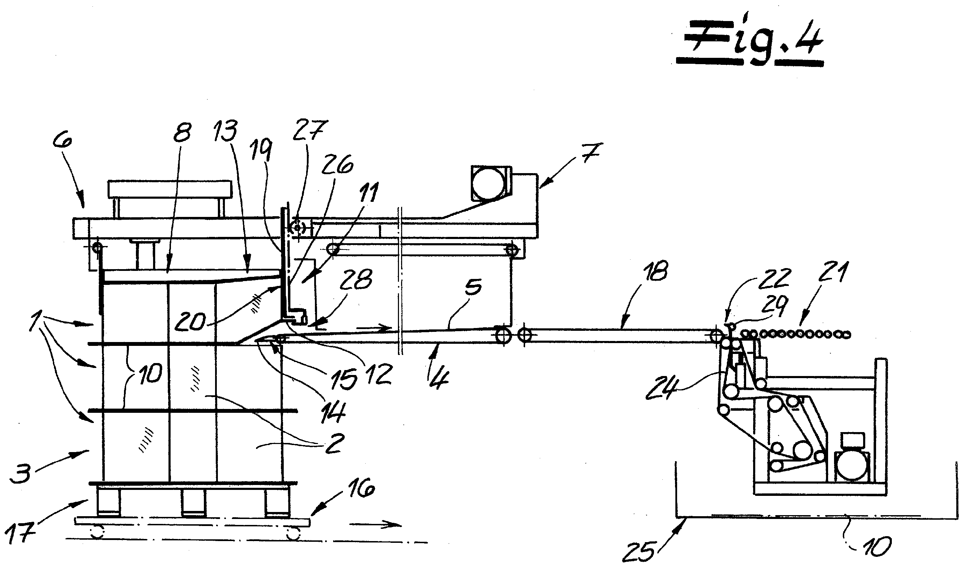

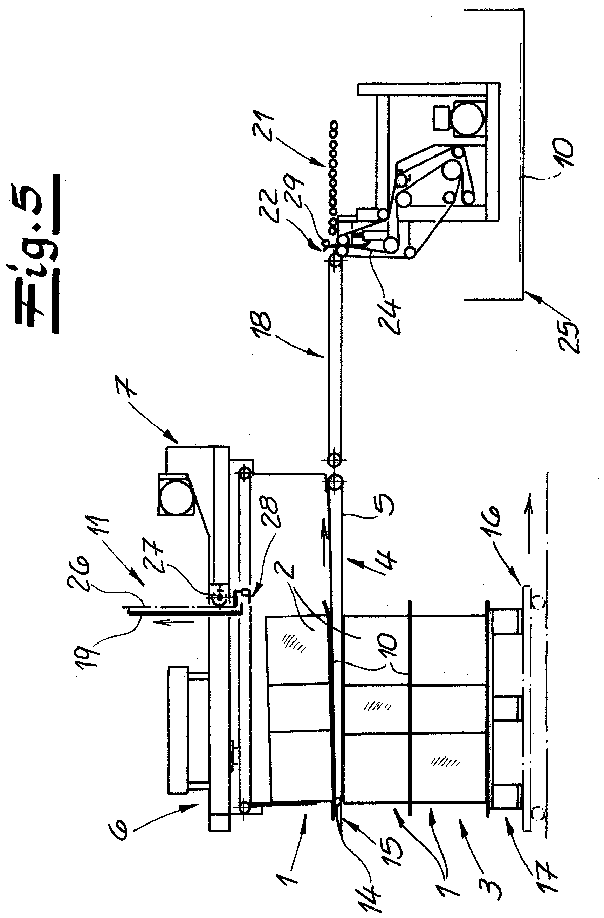

Zwischen den Lagen 1 des Gutstapels 3 sind Zwischenbögen 10 angeordnet, die bevorzugt aus Pappe bestehen. Zur Positionierung der obersten Lage 1 des Gutstapels 3 auf der Lagenfördereinrichtung 4 bzw. auf dem Lagenförderband 5 ist erfindungsgemäß eine Hubeinrichtung 11 vorgesehen, mit der ein Seitenbereich 12 des Zwischenbogens 10 klemmend ergreifbar und anhebbar ist, der zwischen der zu fördernden obersten Lage 1 und der darunter vorhandenen Lage 1 des Gutstapels 3 angeordnet ist. Dazu ist die Hubeinrichtung 11 mit einer Hubklappe 19 aus einer oberen Offenstellung (insbesondere Fig. 1 und 2) in eine untere Geschlossenstellung (insbesondere Fig. 4) verfahrbar. Vorzugsweise und im Ausführungsbeispiel erfolgt dieses Verfahren der Hubeinrichtung 11 über an die Hubeinrichtung 11 angeschlossene Zahnstangen 26, die mit Zahnrädern 27 kämmen. Gemäß einer empfohlenen Ausführungsvariante erfolgt der Antrieb der Hubeinrichtung 11 elektromotorisch. Der Seitenbereich 12 des Zwischenbogens 10 wird zweckmägerweise mit Hilfe von Greiferfingern 28 der Hubeinrichtung 11 angehoben (Fig. 4). Mit dem Seitenbereich 12 des Zwischenbogens 10 wird vorzugsweise auch die vordere Reihe 13 der obersten Lage 1 etwas angehoben, so dass die oberste Lage 1 auf die Lagenfördereinrichtung 4 bzw. auf das Lagenförderband 5 aufziehbar ist. Dazu weist die Lagenfördereinrichtung 4 zweckmäßigerweise und im Ausführungsbeispiel ein gutstapelseitiges verjüngtes Ende 14 auf, so dass dieses verjüngte Ende 14 zwischen der obersten Lage 1 und der darunter angeordneten Lage 1 des Gutstapels 3 einschiebbar ist bzw. so dass sich das verjüngte Ende 14 beim Ziehen des Gutstapels 3 mit der Haubeneinrichtung 6 zur Lagenfördereinrichtung 4 hin zwischen der obersten Lage 1 und der darunter angeordneten Lage 1 einschiebt. Empfohlenermaßen und im Ausführungsbeispiel wird das verjüngte Ende 14 der Lagenfördereinrichtung 4 von einer sich zum Gutstapel 3 hin verjüngenden Einschubleiste 15 gebildet. Diese Einschubleiste 15 erstreckt sich bevorzugt und im Ausführungsbeispiel über den größten Teil der Breite (quer zur Förderrichtung) der Lagenfördereinrichtung 4. Zweckmäßigerweise und im Ausführungsbeispiel verjüngt sich im Übrigen auch das Lagenförderband 5 der Lagenfördereinrichtung 4 zum Gutstapel 3 hin. Die sich verjüngende Einschubleiste 15 ist bevorzugt und im Ausführungsbeispiel an dem verjüngten Ende des Lagenförderbandes 5 angeschlossen. Empfohlenermaßen und im Ausführungsbeispiel fördert das Lagenförderband 5 während des Positionierens der obersten Lage 1 des Gutstapels auf dem Lagenförderband 5 in Aufziehrichtung der obersten Lage 1. Das ist in den Fig. 4 und 5 durch einen Pfeil angedeutet worden. Bei dem Positionieren des Gutstapels in Richtung der Lagenfördereinrichtung 4 bzw. beim Positionieren der obersten Lage 1 auf dem Lagenförderband 5 wird der Gutstapel 3 mitsamt seiner Palette 17 im Übrigen bevorzugt und im Ausführungsbeispiel mittels eines Verfahrwagens 16 verfahren. Zweckmäßigerweise und im Ausführungsbeispiel wird der Verfahrwagen 16 synchron zur Förderung des Lagenförderbandes 5 verfahren, so dass die Fördergeschwindigkeit des Lagenförderbandes 5 der Verfahrgeschwindigkeit des Verfahrwagens 16 entspricht. Auf die vorstehend beschriebene Weise wird also vorzugsweise die Lagenfördereinrichtung 4 bzw. das Lagenförderband 5 unterhalb der obersten Lage 1 des Gutstapels 3 im Gutstapel 3 positioniert.

Im Anschluss an die Positionierung der obersten Lage 1 auf dem Lagenförderband 5 wird bevorzugt und im Ausführungsbeispiel diese Lage 1 auf ein Zwischenförderband 18 überführt. Bei der Positionierung der obersten Lage 1 des Gutstapels 3 auf der Lagenfördereinrichtung 4 lag die Hubklappe 19 an der vorderen Seitenfläche 20 der Lage 1 als Zentrierelement 9 an (Fig. 4). Bei der Überführung dieser Lage 1 auf das Zwischenförderband 18 wird die Hubeinrichtung 11 mit der Hubklappe 19 wieder nach oben in die Offenstellung verfahren (Fig. 5). Dann kann die oberste Lage 1 auf das Zwischenförderband 18 überführt werden und von dort wird es zu einer Vereinzelungsvorrichtung 21 gefördert bzw. transportiert. In der Vereinzelungsvorrichtung 21 wird die Lage 1 wie an sich bekannt in einzelne Reihen bzw. in einzelne Pakete 2 aufgeteilt bzw. vereinzelt.

Vorzugsweise und im Ausführungsbeispiel ist zwischen dem Zwischenförderband 18 und der Vereinzelungsvorrichtung 21 eine Bogenkralle 22 zur Umlenkung und zur Trennung des mit der obersten Lage 1 mitgeführten Zwischenbogens 10 von dieser Lage 1 vorgesehen. Dazu wird die Bogenkralle 22 empfohlenermaßen und im Ausführungsbeispiel nach oben ausgefahren, bevor die Lage 1 an die Vereinzelungsvorrichtung 21 übergeben wird. An die Bogenkralle 22 ist bevorzugt und im Ausführungsbeispiel eine Führungsrolle 29 angeschlossen, die mit der Bogenkralle 22 nach oben ausgefahren wird. Wenn der vordere Rand 23 des Zwischenbogens 10 in Kontakt mit der Bogenkralle 22 kommt, wird der vordere Rand 23 bzw. der Zwischenbogen 10 bevorzugt und im Ausführungsbeispiel durch den herausragenden bogenförmigen Umlenkabschnitt der Bogenkralle 22 nach unten hin abgelenkt. Sobald diese Ablenkung des Zwischenbogens 10 erfolgt ist, wird zweckmäßigerweise und im Ausführungsbeispiel die Bogenkralle 22 mit der Führungsrolle 29 wieder nach unten eingefahren, so dass die Lage 1 über die Bogenkralle 22 und die Führungsrolle 29 auf die Vereinzelungsvorrichtung 21 gefördert werden kann. Der abgelenkte Zwischenbogen 10 wird vorzugsweise und im Ausführungsbeispiel zwischen Förderbändern 24 weitergefördert und schließlich in einem Zwischenbogenmagazin 25 aufgefangen und abgelegt. Diese in den Zwischenbogenmagazin 25 gesammelten Zwischenbögen 10 können vorzugsweise anschließend bei einer Palettierung weiterverwendet werden.

## Patentansprüche

1. Depalettiervorrichtung zur Entnahme von Lagen (1) aus Paketen (2), insbesondere Paketen (2) aus Druckerzeugnissen, von einem Gutstapel (3), mit einer Lagenfördereinrichtung (4) wobei die jeweils oberste Lage (1) des Gutstapels (3) auf die Lagenfördereinrichtung (4) überführbar ist, wobei dazu die Lagenfördereinrichtung (4) unterhalb der obersten Lage (1) des Gutstapels (3) im Gutstapel (3) positionierbar ist und wobei die auf der Lagenfördereinrichtung (4) angeordnete oberste Lage (1) mit der Lagenfördereinrichtung (4) von dem Gutstapel (3) zu einer Vereinzelungsvorrichtung (21) hin förderbar bzw. transportierbar ist, **dadurch gekennzeichnet, dass** eine Hubeinrichtung (11) vorgesehen ist, mit der ein Seitenbereich (12) eines zwischen der zu fördernden obersten Lage (1) und der darunter vorhandenen Lage (1) angeordneten Zwischenbogens (10) klemmend ergreifbar und anhebbar ist, so dass die oberste Lage (1) mit dem darunter angeordneten Zwischenbogen (10) auf die Lagenfördereinrichtung (4) ziehbar ist.

2. Vorrichtung nach Anspruch 1, **dadurch gekennzeichnet, dass** eine Haubeneinrichtung (6) auf dem Gutstapel (3) positionierbar ist, so dass Zentrierelemente (9) der Haubeneinrichtung (6) an Seitenflächen des Gutstapels (3) anliegen und dass der gesamte Gutstapel (3) mit bzw. mit Hilfe der Haubeneinrichtung (6) zur Lagenfördereinrichtung (4) hin verfahrbar ist, so dass die oberste Lage (1) des Gutstapels (3) auf der Lagenfördereinrichtung (4) positioniert wird.

3. Vorrichtung nach einem der Ansprüche 1 bis 3, **dadurch gekennzeichnet, dass** die Lagenfördereinrichtung (4) ein gutstapelseitiges verjüngtes Ende (14) aufweist, so dass das verjüngte Ende (14) der Lagenfördereinrichtung (4) zwischen der obersten Lage (1) und der darunter angeordneten Lage (1) des Gutstapels (3) einschiebbar ist bzw. so dass sich das verjüngte Ende (14) beim Ziehen des Gutstapels (3) zur Lagenfördereinrichtung (4) hin zwischen der obersten Lage (1) und der darunter angeordneten Lage (1) einschiebt.

4. Vorrichtung nach Anspruch 3, **dadurch gekennzeichnet, dass** das verjüngte Ende (14) der Lagenfördereinrichtung (4) von einer sich zum Gutstapel (3) hin verjüngenden Einschubleiste (15) gebildet wird, wobei sich die Einschubleiste (15) bevorzugt über zumindest den größten Teil der Breite der Lagenfördereinrichtung (4) erstreckt.

5. Vorrichtung nach einem der Ansprüche 1 bis 4, **dadurch gekennzeichnet, dass** die Lagenfördereinrichtung (4) zumindest ein Lagenförderband (5) aufweist und dass sich das Lagenförderband (5) vorzugsweise zum Gutstapel (3) hin verjüngt.

6. Vorrichtung nach einem der Ansprüche 1 bis 5, **dadurch gekennzeichnet, dass** die Lagenfördereinrichtung (4) bzw. das Lagenförderband (5) beim Positionieren der obersten Lage (1) des Gutstapels (3) auf der Lagenfördereinrichtung (4) in Aufziehrichtung der obersten Lage (1) fördert.

7. Vorrichtung nach einem der Ansprüche 1 bis 6, **dadurch gekennzeichnet, dass** eine Hubklappe (19) vorgesehen ist, welche Hubklappe (19) beim Transport der obersten Lage (1) des Gutstapels (3) auf die Lagenfördereinrichtung (4) an der lagenfördereinrichtungsseitigen vorderen Seitenfläche (20) der obersten Lage (1) anliegt und dass die Hubklappe (19) für die Weiterförderung der obersten Lage (1) zur Vereinzelungsvorrichtung (21) in eine Offenstellung überführbar ist.

8. Vorrichtung nach einem der Ansprüche 1 bis 7, **dadurch gekennzeichnet, dass** zwischen der Lagenfördereinrichtung (4) und der Vereinzelungsvorrichtung (21) bzw. zwischen einer an die Lagenfördereinrichtung (4) anschließenden Zwischenfördereinrichtung und der Vereinzelungsvorrichtung (21) zumindest eine Bogenkralle (22) zur Umlenkung und zur Trennung zumindest eines unter der geförderten obersten Lage (1) angeordneten Zwischenbogens (10) von dieser Lage (1) vorgesehen ist.

9. Vorrichtung nach Anspruch 8, **dadurch gekennzeichnet, dass** die Bogenkralle (22) quer zur Fördereinrichtung der obersten Lage (1) ausfahrbar und wieder einfahrbar ist.

10. Vorrichtung nach einem der Ansprüche 1 bis 9, **dadurch gekennzeichnet, dass** ein Zwischenbogenmagazin (25) für das Auffangen und für die Ablage der von der geförderten obersten Lage (1) getrennten Zwischenbögen (10) vorgesehen ist.

11. Verfahren zur Entnahme von Lagen (1) aus Paketen (2) - vor allem aus Paketen (2) aus Druckerzeugnissen - von einem Gutstapel (3), durchgeführt mit einer Vorrichtung nach einem der Ansprüche 1 bis 10, wobei der Seitenbereich (12) eines zwischen der zu fördernden obersten Lage (1) und der darunter vorhandenen Lage (1) angeordneten Zwischenbogens (10) von der Hubeinrichtung (11) klemmend ergriffen und angehoben wird, wobei die Lagenfördereinrichtung (4) unterhalb der obersten Lage (1) des Gutstapels (3) im Gutstapel (3) positioniert wird, wobei die jeweils oberste Lage (1) des Gutstapels (3) mit dem darunter angeordneten Zwischenbogen (10) auf die Lagenfördereinrichtung (4) gezogen wird und wobei die auf der Lagenfördereinrichtung (4) angeordnete oberste Lage (1) mit dem darunter angeordneten Zwischenbogen (10) mit der Lagenfördereinrichtung (4) zu einer Vereinzelungsvorrichtung (21) hin gefördert wird bzw. transportiert wird.

## Claims

1. A depalletizing device for the removal of layers (1) from packets (2), in particular packets (2) comprising printed matter, from a stack of goods (3), with a layer conveyor (4), wherein the respective uppermost layer (1) of the stack of goods (3) can be transferred onto the layer conveyor (4), wherein the layer conveyor (4) can be positioned in the stack of goods (3) beneath the uppermost layer (1) of the stack of goods (3) and wherein the uppermost layer (1) arranged on the layer conveyor (4) can be conveyed or transported by the layer conveyor (4) from the stack of goods (3) to a separating device (21), **characterised in that** a lifting apparatus (11) is provided, with which a side region (12) of an intermediate sheet (10) arranged between the uppermost layer (1) to be conveyed and the layer (1) present beneath the latter can be gripped in a clamping manner and raised, so that the uppermost layer (1) with the intermediate sheet (10) arranged beneath the latter can be pulled onto the layer conveyor (4).

2. The device according to claim 1, **characterised in that** a hood device (6) can be positioned on the stack of goods (3), so that centring elements (9) of the hood device (6) abut against lateral surfaces of the stack of goods (3) and that the entire stack of goods (3) can be moved with or with the aid of the hood device (6) towards the layer conveyor (4), so that the uppermost layer (1) of the stack of goods (3) is positioned on the layer conveyor (4).

3. The device according to any one of claims 1 to 3, **characterised in that** the layer conveyor (4) comprises a tapered end (14) at the goods-stack side, so that the tapered end (14) of the layer conveyor (4) can be pushed in between the uppermost layer (1) and the layer (1) of the stack of goods (3) lying beneath the latter or so that the tapered end (14) is pushed in between the uppermost layer (1) and the layer (1) arranged beneath the latter when the stack of goods (3) is pulled towards the layer conveyor (4).

4. The device according to claim 3, **characterised in that** the tapered end (14) of the layer conveyor (4) is formed by an insertion strip (15) tapering towards the stack of goods (3), wherein the insertion strip (15) preferably extends over at least the major part of the width of the layer conveyor (4).

5. The device according to any one of claims 1 to 4, **characterised in that** the layer conveyor (4) comprises at least one layer conveyor belt (5) and that the layer conveyor belt (5) preferably tapers towards the stack of goods (3).

6. The device according to any one of claims 1 to 5, **characterised in that** the layer conveyor (4) or the layer conveyor belt (5), during the positioning of the uppermost layer (1) of the stack of goods (3) on the layer conveyor (4), conveys the uppermost layer (1) in a pull-up direction.

7. The device according to any one of claims 1 to 6, **characterised in that** a lifting flap (19) is provided, which lifting flap (19) abuts against the front lateral face (20) of the uppermost layer (1) on the layer-conveyor side during the transport of the uppermost layer (1) of the stack of goods (3) onto the layer conveyor (4) and that the lifting flap (19) can be transferred into an open position for the further conveying of the uppermost layer (1) to the separating device (21).

8. The device according to any one of claims 1 to 7, **characterised in that** at least one sheet claw (22) for deflecting and separating at least one intermediate sheet (10) arranged beneath the conveyed uppermost layer (1) from this layer (1) is provided between the layer conveyor (4) and the separating device (21) or between an intermediate conveyor adjoining the layer conveyor (4) and the separating device (21).

9. The device according to claim 8, **characterised in that** the sheet claw (22) is extendable and again retractable transversely to the conveyor of the uppermost layer (1).

10. The device according to any one of claims 1 to 9, **characterised in that** an intermediate sheet repository (25) is provided for collecting and for storing intermediate sheets (10) separated from the conveyed uppermost layer (1).

11. A method for the removal of layers (1) from packets (2) - especially from packets (2) comprising printed matter - from a stack of goods (3), carried out with a device according to any one of claims 1 to 10, wherein the side region (12) of an intermediate sheet (10) arranged between the uppermost layer (1) to be conveyed and the layer (1) present beneath is gripped in a clamping manner by the lifting apparatus (11) and raised, wherein the layer conveyor (4) is positioned in the stack of goods (3) beneath the uppermost layer (1) of the stack of goods (3), wherein the respective uppermost layer (1) of the stack of goods (3) with the intermediate sheet (10) arranged beneath the latter is pulled onto the layer conveyor (4) and wherein the uppermost layer (1) arranged on the layer conveyor (4) with the intermediate sheet (10) arranged beneath the latter is conveyed or transported by the layer conveyor (4) towards a separating device (21).

## Revendications

1. Dispositif de dépalettisation pour prélever des couches (1) de paquets (2), en particulier de paquets (2) de produits imprimés, à partir d'une pile de marchandises (3), avec un convoyeur de couches (4), dans lequel la couche respectivement la plus haute (1) de la pile de marchandises (3) peut être transférée sur le convoyeur de couches (4), dans lequel le convoyeur de couches (4) peut être positionné à cet effet au-dessous de la couche la plus haute (1) de la pile de marchandises (3) dans la pile de marchandises (3) et dans lequel la couche la plus haute (1) disposée sur le convoyeur de couches (4) peut être convoyée ou transportée avec le convoyeur de couches (4) de la pile de marchandises (3) jusqu'à un dispositif de séparation (21),
**caractérisé en ce qu'**un dispositif de levage (11) est prévu, avec lequel il est possible de saisir par serrage et soulever une zone latérale (12) d'une feuille intermédiaire (10) disposée entre la couche la plus haute (1) à convoyer et la couche (1) présente en-dessous, de sorte que la couche la plus haute (1) peut être tirée avec la feuille intermédiaire (10) disposée en-dessous sur le convoyeur de couches (4).

2. Dispositif selon la revendication 1, **caractérisé en ce qu'**un dispositif de capot (6) peut être positionné sur la pile de marchandises (3) de sorte que des éléments de centrage (9) du dispositif de capot (6) reposent contre des surfaces latérales de la pile de marchandises (3) et que l'ensemble de la pile de marchandises (3) peut être déplacé avec le dispositif de capot (6), ou à l'aide de celui-ci, vers le convoyeur de couches (4) de sorte que la couche la plus haute (1) de la pile de marchandises (3) est positionnée sur le convoyeur de couches (4).

3. Dispositif selon l'une des revendications 1 à 3, **caractérisé en ce que** le convoyeur de couches (4) présente une extrémité effilée (14) côté pile de marchandises, de sorte que l'extrémité effilée (14) du convoyeur de couches (4) peut être insérée entre la couche la plus haute (1) et la couche (1) située en-dessous de la pile de marchandises (3) ou de sorte que l'extrémité effilée (14), en tirant la pile de marchandises (3) vers le convoyeur de couches (4), s'insère entre la couche la plus haute (1) et la couche (1) située en-dessous.

4. Dispositif selon la revendication 3, **caractérisé en ce que** l'extrémité effilée (14) du convoyeur de couches (4) est formée par une nervure d'insertion (15) effilée vers la pile de marchandises (3), dans lequel la nervure d'insertion (15) s'étend de préférence au moins sur la plus grande partie de la largeur du convoyeur de couches (4).

5. Dispositif selon l'une des revendications 1 à 4, **caractérisé en ce que** le convoyeur de couches (4) présente au moins une bande convoyeuse de couches (5) et que la bande convoyeuse de couches (5) est de préférence effilée vers la pile de marchandises (3).

6. Dispositif selon l'une des revendications 1 à 5, **caractérisé en ce que** le convoyeur de couches (4) ou la bande convoyeuse de couches (5), lors du positionnement de la couche la plus haute (1) de la pile de marchandises (3) sur le convoyeur de couches (4), assure le convoyage en direction d'élévation de la couche la plus haute (1).

7. Dispositif selon l'une des revendications 1 à 6, **caractérisé en ce qu'**un panneau de levage (19) est prévu, lequel panneau de levage (19), lors du transport de la couche la plus haute (1) de la pile de marchandises (3) sur le convoyeur de couches (4), repose contre la surface latérale avant (20) côté convoyeur de couches de la couche la plus haute (1) et que l'on peut faire passer le panneau de levage (19) à une position ouverte pour la suite du convoyage de la couche la plus haute (1) jusqu'au dispositif de séparation (21).

8. Dispositif selon l'une des revendications 1 à 7, **caractérisé en ce qu'**entre le convoyeur de couches (4) et le dispositif de séparation (21) ou entre un convoyeur intermédiaire à la suite du convoyeur de couches (4) et le dispositif de séparation (21), on prévoit au moins un crampon de feuille (22) pour détourner et séparer au moins une feuille intermédiaire (10), disposée sous la couche la plus haute (1) convoyée, de cette couche (1).

9. Dispositif selon la revendication 8, **caractérisé en ce que** le crampon de feuille (22) peut sortir transversalement à la direction de convoyage de la couche la plus haute (1) et peut de nouveau rentrer.

10. Dispositif selon l'une des revendications 1 à 9, caractérisé qu'un magasin à feuilles intermédiaires (25) pour la collecte et le dépôt des feuilles intermédiaires (10) séparées de la couche la plus haute (1) convoyée est prévu.

11. Procédé pour le prélèvement de couches (1) de paquets (2) - notamment de paquets (2) de produits imprimés - à partir d'une pile de marchandises (3), mis en œuvre avec un dispositif selon l'une des revendications 1 à 10, dans lequel la zone latérale (12) d'une feuille intermédiaire (10) disposée entre la couche la plus haute (1) à convoyer et la couche (1) présente en-dessous est saisie par serrage et est soulevée par le dispositif de levage (11), dans lequel le convoyeur de couches (4) est positionné au-dessous de la couche la plus haute (1) de la pile de marchandises (3) dans la pile de marchandises (3), dans lequel la couche respectivement la plus haute (1) de la pile de marchandises (3) est tirée avec la feuille intermédiaire (10) disposée en-dessous sur le convoyeur de couches (4) et dans lequel la couche la plus haute (1) disposée sur le convoyeur de couches (4) avec la feuille intermédiaire (10) disposée en-dessous est convoyée ou transportée avec le convoyeur de couches (4) jusqu'à un dispositif de séparation (21) .
